# EUROPEAN PATENT SPECIFICATION

(11) **EP 2 295 526 B1**
(45) Date of publication and mention of the grant of the patent: **20.03.2019**
(21) Application number: 10004011.2
(22) Date of filing: 15.04.2010
(51) Int. Cl.: C10J 3/66, C10J 3/14

(54) **HYBRID PYROLYSIS AND GASIFICATION SYSTEM AND USE FOR CONVERTING WASTE**
HYBRIDES PYROLYSE- UND VERGASUNGSSYSTEM UND DESSEN NUTZUNG ZUR UMWANDLUNG VON ABFÄLLEN
PYROLYSE HYBRIDE ET SYSTÈME DE GAZÉIFICATION DE CONVERSION DES DÉCHETS ET SON UTILISATION

(30) Priority: 29.04.2009 IT AV20090001
(43) Date of publication of application: 16.03.2011
(73) Proprietor: Protodesign S.R.L., 83100 Avellino (IT)
(72) Inventor: Gimelli, Alfredo, 80100 Napoli (IT); Capaldi, Pietro, 80100 Napoli (IT)
(74) Representative: Garavelli, Paolo

(56) References cited:
- EP-A1- 0 208 881
- EP-A2- 0 263 338
- EP-A2- 0 509 134
- EP-A2- 0 718 391
- DE-A1- 19 608 093

## Description

The present invention refers to a hybrid pyrolysis and gasification process and system for converting generic wastes into a gaseous fuel (a particular "fuel-from-wastes" - CDR) with low environmental impact.

The idea of using heat obtained from the gasification of products going out of a pyrolyser to perform the pyrolysis process is partly used in the following prior applications:
- EP-A2-1 775 336, filed on 18 April 2007 in the name of Solenia S.A. (Minusio, Switzerland);
- US-B2-6 849 160, filed on 1 February 2005 in the name of Sanifa (Nanterre, France).

The process of the Solenia's application can be applied only to organic substances, since it provides for the combustion only of the char produced by pyrolysis, without a preventive cleaning, and burnt gases are directly sent to the atmosphere; differently from this process, the process of the invention does not provide for any emission to the atmosphere. In fact, this process provides for the following inputs: generic wastes, air, possible water, possible additives, possible auxiliary fuels; the materials obtained from the process are syngas (CDR), that can be used as a normal fuel, inerts that can be used as base material in buildings, and metals, that can be recycled.

Moreover, in the Solenia's application, heat for the pyrolysis process is transmitted from outside, thereby not allowing, due to technologic limits, a very high productivity.

With the Sanifa's system, instead, heat is directly transmitted from inside, but the amount and quality of the products to be gasified cannot be controlled. Instead, the present invention allows it, since it provides for the use of gasification in series and in a loop with pyrolysis: this innovation allows transforming a generic waste (solid urban and industrial wastes, biomasses as pruning wastes or biomasses as storage companies wastes, etc.) into a "clean" gaseous fuel, namely without potentially polluting substances such as: chlorine, fluorine, sulfur and heavy metals.

The gasified part is essentially the solid fuel (char) and the condensable fuel (tar) produced by pyrolysis. Such peculiarity can be obtained with a double cleaning of the solid part obtained from pyrolysis through a mechanical separator and a chemical and electric washing. In particular, cleaning (not performed in the Sanifa's system) allows removing many of the most polluting substances that are made harmless and can be found in the so-called inerts. Tar (condensable part of gases exiting the pyrolysis) can be gasified, since it is separated from the gases produced from pyrolysis. In the Sanifa's application, such operation is not performed: in fact, tar remains in the gas going out of the system, together with the majority of polluting substances.

EP 0 208 881 A1, DE 196 08 093 A1, EP 0 509 134 A2, EP 0 263 338 A2 and EP 0 718 391 A2 show systems and processes for the pyrolysis and subsequent gasification of waste materials similar to the claimed invention.

The above and other objects and advantages of the invention, as will appear from the following description, are obtained by a hybrid system and use of that system as claimed in the respective independent claims. Preferred embodiments and non-trivial variations of the present invention are claimed in the dependent claims.

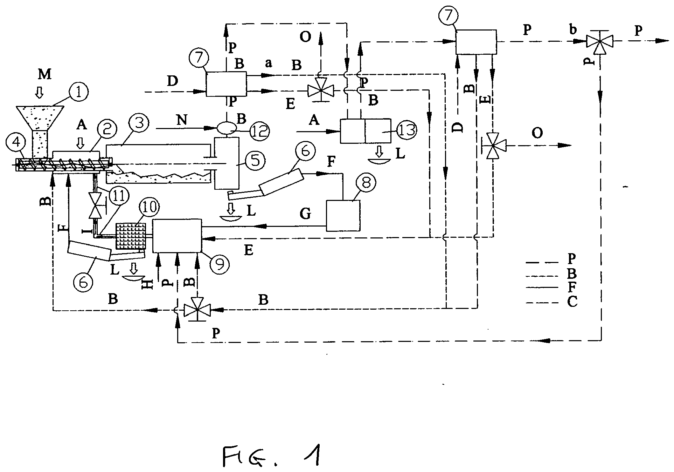

The present invention will be better described by some preferred embodiments thereof, given as a non-limiting example, with reference to the enclosed drawings, in which the only Figure 1 shows a schematic diagram of the main components of the system for performing the inventive process.

The use of the invention allows transforming generic wastes (solid urban and industrial wastes, biomasses coming from pruning, from storage companies or from the so-called energetic cultivations, etc.) into a "clean" gaseous fuel, namely without its most polluting substances, such as: chlorine, fluorine, sulfur and heavy metals.

The use is a way for disposing wastes without additional energy consumptions, apart from the electric energy that is used for actuating the rotating oven of the pyrolyser and its auxiliary components (fans, electrically-actuated valves, etc.).

The main heat treatment to which wastes are subjected is pyrolysis, which is a thermo-chemical decomposition process (400 °C - 900 °C) of organic materials, obtained by transmitting heat and with oxidating agents completely absent; such treatment transforms wastes from their solid state into a gaseous fuel (syngas), into a liquid fuel (the so-called tar or pyrolysis oil) and into a carbonaceous residual (char).

The complete schematic diagram of the process is included in Figure 1; the numbers designate the apparatuses to be used for the process, while the capital letters designate all materials intervening in the process as entry and exit, while the lower-case letters designate the material properties.

The used apparatuses are: 1, hopper; 2, chamber for mixing wastes and hot gases for gasification; 3, rotating drum (where pyrolysis occurs); 4, pump; 5, centrifugating device (to separate syngas and tar from char); 6, mechanical separator; 7, thermal separator; 8, cleaning element for char, chemical and electric washing; 9, gasifying device; 10, filter after gasifying device; 11, hot gas duct coming from gasifying device; 12, chamber for water injection; 13, chamber for mixing additives and hot gases, and for collecting inerts.

The materials entering and exiting the process are: A, additives; B, tar; C, air; D, ambient air; E, hot air; F, char; G, clean char; H, auxiliary fuel; I, hot gas; L, inerts; M, generic waste entry; N, water injection; O, possible excessive air vent; P, syngas.

The material properties of the process are: a, temperature lower than 180 °C; b, approximately ambient temperature.

Pyrolysis is performed in the rotating drum 3. Wastes M, inserted in the process with the generic hopper-pump assembly 1, 4 are mixed in the chamber 2 with hot gas produced by gasification. Such mixing allows transmitting the thermal energy which is necessary and sufficient to support the pyrolysis process, that, in turn, allows decomposing the wastes into a solid part (char + inerts) and a gaseous part (syngas + condensable tar). The thermal energy to perform such treatment is obtained from gasification 9 with air and water 12 of solid (char) and liquid (tar) pyrolysis products. The idea of using heat obtained from gasification of products going out of the pyrolyser to perform the pyrolysis process is partly known from the above-cited prior patents.

However, in this case, the gasified part is essentially the solid fuel (char) and the condensable fuel (tar) produced by the pyrolysis. Such peculiarity can be obtained with a double cleaning of the solid part obtained from pyrolysis through the mechanical separator 6 and the chemical and electrical washing 8. In particular, as stated, cleaning allows removing many of the most polluting substances that are made harmless and can be found in the so-called inerts. The tar (condensable part of gases exiting the pyrolysis) can be gasified, since it is separated, by the element 7, from gases produced by pyrolysis. The thermal energy removed from the pyrolysis gases to separate syngas from tar (7 in Fig. 1) is completely recovered in the gasifying device 9.

A further innovative aspect of the use of the invention is the complete gasification of tar and char produced by pyrolysis. Such gasification is performed by conveniently controlling the amounts of water and air to be inserted in the system (in particular, water can also not be inserted); the control is extended, also and above all, to gasification temperature, so that it is not very high, in order to keep the heat value for gases I reinserted (through the ducts 11 in the mixer 2) into the pyrolyser as high as possible. The transmission of heat produced by gasification to wastes to be pyrolysed occurs through mixing (2 in Fig. 1). Namely, the thermal energy that is used for the pyrolysis process is adduced inside the chamber where pyrolysis occurs and not from outside, highly increasing thermal efficiency and productivity of the process with respect to currently used systems. As stated, with the gasification process, heat must be obtained that is necessary to perform the pyrolysis process at the temperature deemed most suitable for the type of waste, but at the same time is transformed into gas, tar (liquid) and char (solid). If the amount of char and tar is excessive, the extra is sent to the mixing chamber 2 and cyclically pyrolysed and gasified (in any case it is a transient operating mode, till a balance is reached at a higher pyrolysis temperature, or at the same temperature and decreasing the amount of air to be sent to the gasifying device). In the opposite case, namely the one in which the amount of tar and char is not enough to generate, from its gasification, the necessary heat for pyrolysis, then first of all syngas will be used and possibly an auxiliary fuel 9 (auxiliary fuel H).

The temperature (between 400 and 900 °C) at which the pyrolysis process is stabilised depends on many factors, among which the main ones are: composition and heat value of wastes and amount of air and water used for the gasification process. The solid products exiting the rotating drum are separated from the gaseous products in a centrifugating device 5. Both these products are at the pyrolysis temperature (400 - 900 °C). Solid products are collected from below and afterwards are divided through the mechanical system 6 into char (essentially a solid fuel with a high carbon percentage) and stabilised solid residuals, that in the diagram in Figure 1 are called inerts L.

Char going out of element 6 is not completely separated from inerts, and therefore needs to be subjected to other chemical and electrical processes 8, that allow its further separation. It is important to underline that, due to these last two processes, the removal of the majority of the polluting substances is performed. Moreover, from mechanical, chemical and electrical processes, metals possibly contained in treated wastes are recovered. Such process is for all purposes a system for recovering metals (iron, steel, aluminium, copper, etc.) possibly contained in wastes to be disposed of.

Differently from the solid product, the gaseous product going out of the centrifugating device 5 is subjected to a different process, since it is composed of two distinct phases: syngas and tar. Syngas, produced thereby, is a clean fuel gas with a composition and heat value that substantially depend on the waste composition and the temperature at which the pyrolysis process occurs. In any case, for an "average" urban solid waste, 12,000 kJ/kg can also be exceeded; tar, instead, is the condensable component and can still contain parts of polluting substances. Therefore, it is important to separate these two phases, and this can occur by cooling gas going out of the centrifugating device 5. The cooling process can only happen with air 7, since its flow-rate is linked also to the optimum temperature for pyrolysis, that is obtained through mixing 2 of wastes with hot gases derived from the gasification process. For such purpose, a previous water injection is performed (that in the diagram is designated with letter N - 12 in Fig. 1), that also favours the gasification of the whole tar and char. The use of an auxiliary fuel in the gasifying device 9 is useful in the system start-up steps or if wastes have a particularly low heat value. Gas produced by gasification is filtered with mechanical systems to recover solid residals, that are further separated into char and inerts. Char recovered thereby is again inserted in the rotating drum, mixed (2 in Fig. 1) both with tar (possibly excess tar) and hot gas deriving from gasification, and with wastes to be disposed of and possibly with additives (calcium carbonate - CaCO₃, sodium carbonate - Na₂CO₃, etc.). The addition of additives, as known, is useful to chemically "capture" chlorine and fluorine atoms and other, that are then disposed of with inerts like harmless salts, without being transformed into dangerous compounds called dioxines and furanes. The introduction of additives in the process can occur in different sections (for example can possibly occur in sections 2 and/or 13 in Fig. 1) according to composition, humidity and heat value of wastes.

## Claims

1. System for converting wastes into gaseous fuels adapted to subject the wastes to a pyrolysis process, and subject the liquid and solid outputs of the pyrolysis process to a gasification process, wherein said pyrolysis process and said gasification process are performed in series and in loop, **characterized in that** it comprises:
- at least one hopper (1);
- at least one chamber (2), connected to the hopper (1), for mixing wastes and hot gases from gasification;
- at least one rotating drum (3), connected to the chamber (2), adapted to perform a pyrolysis process;
- at least one pump (4) adapted to operate the chamber (2);
- at least one centrifugating device (5) connected to the rotating drum (3) and adapted to separate syngas and tar from char;
- at least one mechanical separator (6) for the char and at least one thermal separator (7) for the tar, connected to the centrifugating device (5) ;
- at least one gasifying device (9) adapted to perform the gasification process of tar and char from the pyrolysis process;
- at least one cleaning element (8), connected to the mechanical separator (6) and the gasifying device (9) and adapted to perform a chemical and electric washing of the char; and
- at least one hot gas duct (11) coming from the gasifying device (9) and connected to the chamber (2).

2. System according to claim 1, further comprising at least one filter (10) placed downstream of the gasifying device (9) and connected thereto.

3. System according to claim 1, further comprising at least one chamber (12) for water injection placed upstream of the centrifugating device (5) and connected thereto.

4. System according to claim 1, further comprising at least one chamber (13) for mixing additives and hot gases, and for collecting inerts, placed upstream of the thermal separator (7) and connected thereto.

5. Use of the system according to claims 1-4 for converting wastes into gaseous fuels comprising the steps of: - subjecting the wastes to a pyrolysis process; - subjecting the wastes to a gasification process, wherein said pyrolysis process and said gasification process are performed in series and in a loop.

6. Process according to claim 5, wherein the pyrolysis process is performed with heat produced by the gasification process of char and tar produced by the pyrolysis process.

7. Use according to claim 6, further comprising the step of sending, to the wastes, the heat deriving from gasification, through mixing.

8. Use according to claim 6, further comprising, before the step of subjecting the wastes to a gasification process, the step of mechanically, chemically and electrically cleaning the char.

9. Use according to claim 6, wherein the gasification process of char and tar is performed through water and air that contain excess heat used for performing the pyrolysis process.

10. Use according to claim 9, further comprising the step of separating tar from syngas through cooling with water and air.

11. Use according to claim 7, further comprising the step of filtering hot gases deriving from the gasification process, said hot gases being afterwards mixed with wastes.

## Patentansprüche

1. System zur Umwandlung von Abfällen in gasförmige Brennstoffe, das dazu dient, die Abfälle einem Pyrolyseprozess zu unterziehen und die austretenden Flüssigkeiten und Festkörper des Pyrolyseprozesses einem Vergasungsprozess zu unterziehen,
wobei der genannte Pyrolyseprozess und der genannte Vergasungsprozess in Reihe und in einem Regelkreis ausgeführt werden, das System ist **dadurch gekennzeichnet, dass** es Folgendes enthält:
- mindestens einen Trichter (1);
- mindestens eine Kammer (2), die mit dem Trichter (1) verbunden ist, um Abfälle und Heißgase aus der Vergasung zu vermischen;
- mindestens einen Drehzylinder (2), der mit der Kammer (2) verbunden ist, welcher dazu dient, einen Pyrolyseprozess auszuführen;
- mindestens eine Pumpe (4), die dazu dient, die Kammer (2) zu aktivieren;
- mindestens eine Zentrifugenvorrichtung (5), die mit einem Drehzylinder (3) verbunden ist und dazu dient, das Syngas und das Teer von der Holzkohle zu trennen;
- mindestens einen mechanischen Abscheider (6) für die Holzkohle und mindestens einen Wärmeabscheider (7) für das Teer, die mit der Zentrifugenvorrichtung (5) verbunden sind;
- mindestens eine Vergasungsvorrichtung (9), die dazu dient, den Vergasungsprozess des Teers und der Holzkohle aus dem Pyrolyseprozess auszuführen;
- mindestens ein Reinigungselement (8), das mit dem mechanischen Abscheider (6) und mit der Vergasungsvorrichtung (9) verbunden ist und dazu dient, eine chemische und elektrische Reinigung der Holzkohle auszuführen;
und
- mindestens eine Heißgasleitung (11), die aus der Vergasungsvorrichtung (9) kommt und mit der Kammer (2) verbunden ist.

2. System gemäß Patentanspruch 1, das außerdem mindestens einen Filter (10) enthält, der unterhalb der Vergasungsvorrichtung (9) angebracht und mit dieser verbunden ist.

3. System gemäß Patentanspruch 1, das außerdem mindestens eine Kammer (12) für die Einspritzung von Wasser enthält, welche oberhalb der Zentrifugenvorrichtung (5) angebracht und mit dieser verbunden ist.

4. System gemäß Patentanspruch 1, das außerdem mindestens eine Kammer (13) für die Mischung von Additiven und Heißgasen und für die Sammlung von Inertstoffen enthält, die oberhalb des Wärmeabscheiders (7) angebracht und mit diesem verbunden ist.

5. Verwendung des Systems gemäß den Patentansprüchen 1-4 zur Umwandlung von Abfällen in gasförmige Brennstoffe, das folgende Phasen enthält: - Die Abfälle einem Pyrolyseprozess unterziehen; - Die Abfälle einem Vergasungsprozess unterziehen, in dem der genannte Pyrolyseprozess und der genannte Vergasungsprozess in Reihe und in einem Regelkreis ausgeführt werden.

6. Prozess gemäß Patentanspruch 1, in dem der Pyrolyseprozess mit Hitze ausgeführt wird, die durch den Vergasungsprozess der Holzkohle und des Teers erzeugt wird, welche durch den Pyrolyseprozess erzeugt werden.

7. Verwendung gemäß Patentanspruch 6, der außerdem die Phase enthält, die Hitze aus der Vergasung durch Mischung an die Abfälle zu leiten.

8. Verwendung gemäß Patentanspruch 6, der außerdem vor der Phase, die Abfälle einem Vergasungsprozess zu unterziehen, die mechanische, chemische und elektrische Reinigungsphase der Holzkohle enthält.

9. Verwendung gemäß Patentanspruch 6, in dem der Vergasungsprozess der Holzkohle und des Teers durch Wasser und Luft ausgeführt wird, die übermäßige Hitze enthalten, welche für die Ausführung des Pyrolyseprozesses verwendet wird.

10. Verwendung gemäß Patentanspruch 9, der außerdem die Trennungsphase des Teers vom Syngas durch Kühlung mit Wasser und Luft enthält.

11. Verwendung gemäß Patentanspruch 7, der außerdem die Filtrierungsphase der Heißgase enthält, die aus dem Vergasungsprozess kommen, die genannten Heißgase werden danach mit den Abfällen vermischt.

## Revendications

1. Système pour convertir les déchets en combustibles gazeux apte à soumettre les déchets à un processus de pyrolyse et à soumettre les produits liquides et solides du processus de pyrolyse à un processus de gazéification,
où le processus de pyrolyse et le processus de gazéification sont réalisés en série et en boucle, **caractérisé en ce qu'**il comprend :
- au moins une trémie (1) ;
- au moins une chambre (2), reliée à la trémie (1), pour mélanger les déchets et les gaz chauds de la gazéification ;
- au moins un cylindre rotatif (3), relié à la chambre (2), apte à exécuter un processus de pyrolyse ;
- au moins une pompe (4) apte à activer la chambre (2) ;
- au moins un dispositif de centrifugation (5) relié au cylindre rotatif (3) et apte à séparer le syngas et le tar du char ;
- au moins un séparateur mécanique (6) pour le char et au moins un séparateur thermique (7) pour le tar, reliés au dispositif de centrifugation (5) ;
- au moins un dispositif de gazéification (9) apte à exécuter le processus de gazéification du tar et du char à partir du processus de pyrolyse ;
- au moins un élément de nettoyage (8), relié au séparateur mécanique (6) et au dispositif de gazéification (9), qui est apte à exécuter un lavage chimique et électrique du char ;
et
- au moins un conduit de gaz chaud (11) provenant du dispositif de gazéification (9) et relié à la chambre (2).

2. Système, selon la revendication 1, comprenant par ailleurs au moins un filtre (10) situé en aval du dispositif de gazéification (9) et relié à ce dernier.

3. Système, selon la revendication 1, comprenant par ailleurs au moins une chambre (12) pour l'injection d'eau qui est placée en amont du dispositif de centrifugation (5) et est reliée à ce dernier.

4. Système, selon la revendication 1, comprenant par ailleurs au moins une chambre (13) pour mélanger les additifs et les gaz chauds, et pour recueillir les substances inertes, qui est située en amont du séparateur thermique (7) et est reliée à ce dernier.

5. Utilisation du système selon les revendications 1-4 pour convertir les déchets en combustibles gazeux comprenant les phases suivantes : - soumettre les déchets à un processus de pyrolyse ; - soumettre les déchets à un processus de gazéification, où le processus de pyrolyse et le processus de gazéification sont réalisés en série et en boucle.

6. Procédé, selon la revendication 1, où le processus de pyrolyse est réalisé avec la chaleur produite à travers le processus de gazéification du char et du tar produits par le processus de pyrolyse.

7. Utilisation, selon la revendication 6, comprenant par ailleurs la phase consistant à envoyer aux déchets la chaleur dérivant de la gazéification à travers un malaxage.

8. Utilisation, selon la revendication 6, comprenant par ailleurs, avant la phase consistant à soumettre les déchets à un processus de gazéification, la phase consistant à nettoyer de manière mécanique, chimique et électrique le char.

9. Utilisation, selon la revendication 6, où le processus de gazéification du char et tar est réalisé en utilisant de l'eau et de l'air qui contiennent la chaleur excédante utilisée pour exécuter le processus de pyrolyse.

10. Utilisation, selon la revendication 9, comprenant en outre la phase consistant à séparer le tar du syngas à travers le refroidissement avec de l'eau et de l'air.

11. Utilisation, selon la revendication 7, comprenant en outre la phase consistant à filtrer les gaz chauds provenant du processus de gazéification, ces gaz chauds sont ensuite mélangés avec les déchets.
